# FASCICULE DE BREVET EUROPEEN

(11) **EP 2 788 204 B1**
(45) Date de publication et mention de la délivrance du brevet: **01.11.2017**
(21) Numéro de dépôt: 12808284.9
(22) Date de dépôt: 05.12.2012
(51) Int. Cl.: B60C 11/04, B60C 11/03

(54) **COMBINAISON D'UNE STRUCTURE DE PNEU POIDS LOURD AVEC UNE SCULPTURE DE BANDE DE ROULEMENT**
KOMBINATION VON EINER SCHWERLASTREIFENSTRUKTUR MIT EINEM LAUFSTREIFENPROFIL
COMBINATION OF A HEAVY DUTY TIRE STRUCTURE WITH A TREAD PROFILE

(30) Priorité: 09.12.2011 FR 1161391
(43) Date de publication de la demande: 15.10.2014
(73) Titulaire: Compagnie Générale des Etablissements Michelin, 63000 Clermont-Ferrand (FR)
(72) Inventeur: MARLIER, Fabien, F-63040 Clermont-Ferrand Cedex 9 (FR); QUANTINET, Benjamin, F-63040 Clermont-Ferrand Cedex 9 (FR); SLACHMUYLDERS, Eric, F-63040 Clermont-Ferrand Cedex 9 (FR)
(74) Mandataire: Diernaz, Christian
(86) Numéro de dépôt international: PCT/EP2012/074455
(87) Numéro de publication internationale: WO 2013/083610

(56) Documents cités:
- EP-A2- 0 335 694
- EP-A2- 1 275 527
- EP-A2- 1 800 843
- EP-A2- 2 191 984
- WO-A1-03/097384
- WO-A1-2010/053478
- WO-A1-2011/002454
- WO-A1-2011/135000
- US-A- 2 960 138

## Description

### DOMAINE DE L'INVENTION

La présente invention concerne les pneus pour véhicules de type poids lourd et plus particulièrement les pneus destinés à équiper des véhicules poids lourd.

La présente invention concerne un pneumatique à armature de carcasse radiale, destiné à équiper des véhicules lourds tels que camions, bus, tracteurs, remorques ... etc.., et concerne plus particulièrement l'armature de sommet d'un tel pneumatique en combinaison avec sa bande de roulement.

D'une manière générale, l'armature de carcasse radiale du pneumatique considéré, formée d'éléments de renforcement métalliques ou en polyamide aromatique inextensibles, est surmontée radialement vers l'extérieur par une armature de sommet comprenant plusieurs nappes de sommet. Dans un mode de réalisation bien connu, l'armature de sommet comprend une nappe de triangulation formée d'éléments métalliques orientés par rapport à la direction circonférentielle d'un angle compris entre 45 degrés et 90 degrés, ladite nappe de triangulation étant elle-même surmontée de deux nappes de travail formées d'éléments de renforcement métalliques inextensibles, parallèles entre eux dans chaque nappe et croisés d'une nappe à la suivante en faisant avec la direction circonférentielle des angles compris entre 10 degrés et 45 degrés. Ces nappes de travail, formant l'armature de travail, sont recouvertes d'au moins une nappe - dite nappe de protection, dont la fonction essentielle est d'assurer une protection des nappes de travail contre d'éventuelles agressions provenant de corps étrangers s'introduisant dans les rainures de la bande.

Cette nappe peut être formée d'éléments de renforcement métalliques dits "extensibles" ou encore dits "élastiques", c'est-à-dire dont la courbe force allongement présente un allongement relativement important sous faible effort de tension. Dans ce cas, les éléments de renfort de la nappe de protection sont généralement orientés dans la même direction et avec le même angle en valeur absolue que les éléments de renforcement de la nappe de travail radialement la plus à l'extérieur, et généralement axialement moins large que la nappe de travail radialement la plus extérieure. Cette nappe de protection peut être réalisée dans tout matériau et structure qui permet d'obtenir la fonction de protection de l'armature de travail ; on peut envisager un matériau homogène sous forme de bandes enroulées circonférentiellement ou d'une nappe.

En combinaison avec cette structure interne d'armature, il est connu de pourvoir la bande de roulement, c'est-à-dire la partie du pneu destinée à venir en contact avec le sol lors du roulage et à s'user progressivement, avec une sculpture formée de rainures et d'incisions.

On distingue, dans la présente demande, les incisions des rainures en ce que les incisions ont une largeur faible permettant en général un contact entre les parois en vis-à-vis les délimitant pendant le roulage et notamment dans au cours du passage dans le contact avec le sol, ce qui ne saurait être le cas pour les rainures dans les conditions normales d'usage du pneu.

### ETAT DE LA TECHNIQUE

Le document US-20100269967-A décrit un pneu pour poids lourd selon le préambule de la revendication 1 comprenant une armature de carcasse radiale surmontée par une armature de sommet centrée sur le plan équatorial du pneu elle-même surmontée d'une bande de roulement. Cette armature comprenant plusieurs nappes de travail surmontées d'une nappe de protection de largeur sensiblement réduite comparativement à la largeur de la nappe de travail la plus étroite. Cette nappe de protection est localisée radialement à l'intérieur de deux rainures disposées de manière symétrique par rapport au plan équatorial. Axialement à l'extérieur de ces deux rainures, la bande de roulement est pourvue de chaque côté avec une rainure de même profondeur que les deux autres rainures. Cette structure impose, pour être performante en endurance, la présence d'une épaisseur minimale entre le fond des rainures et la dernière des nappes de travail dans la région située axialement au-delà de la nappe de protection.

Le document WO 2011/002454 décrit un pneu obtenu par rechapage, ce pneu comprenant une carcasse surmontée radialement à l'extérieur d'une armature de sommet, elle-même surmontée par une bande de roulement pré-vulcanisée. Cette bande de roulement comprend plusieurs rainures s'ouvrant sur l'extérieur et des rainures s'ouvrant sur la face interne de la bande. Ces dernières sont prévues pour former de nouvelles rainures après usure partielle de la bande. L'ensemble des rainures internes et externes sont disposés radialement au-dessus de l'ensemble des nappes formant l'armature de sommet. La nervure de bord ainsi formée est relativement rigide puisque l'ensemble des nappes de l'armature de sommet y sont présentes.

Le besoin existe d'une structure de pneu pour véhicules poids lourds qui, combinée à une sculpture de bande de roulement, permette une meilleure optimisation des performances de résistance au roulement, d'endurance et de mise à plat dans le contact avec une chaussée, tout en assurant une sécurité optimale et cela quel que soit l'état d'usure du pneu.

### Définitions :

Le taux de creux volumique d'une sculpture est égal au rapport entre le volume des creux (formés notamment par des rainures et des cavités) délimités par les éléments de relief (blocs, nervures) et le volume total comprenant le volume de matière et le volume des rainures et des cavités. Un taux de creux volumique faible indique un faible volume de creux relativement au volume de la bande de roulement.

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne de manière générique soit une rainure soit une incision et correspond à l'espace délimité par des parois de matière se faisant face et distantes l'une de l'autre d'une distance non nulle. Ce qui différencie une incision d'une rainure c'est précisément cette distance ; dans le cas d'une incision, cette distance est appropriée pour permettre la mise en contact au moins partielle des parois opposées délimitant ladite incision lors du passage dans le contact avec la chaussée. Dans le cas d'une rainure, les parois de cette rainure ne peuvent venir en contact l'une contre l'autre dans les conditions usuelles de roulage.

Les conditions d'utilisation du pneu telles que définies notamment par la norme E.T.R.T.O. précisent la pression de gonflage de référence correspondant à la capacité de charge du pneu indiquée par son indice de charge et son code vitesse.

L'empreinte de contact avec la chaussée est réalisée avec le pneu en statique, à partir de laquelle on calcule une valeur moyenne de longueur d'empreinte.

Le plan équatorial correspond au plan perpendiculaire à l'axe de rotation du pneu et passant par les points radialement les plus à l'extérieur lorsque ce pneu est monté sur sa jante de montage et gonflé à sa pression de gonflage de référence.

### BREF EXPOSÉ DE L'INVENTION

La présente invention vise à réaliser une meilleure optimisation des performances en résistance au roulement et en endurance des pneus pour poids lourd tout en assurant à l'usager une sécurité optimale et cela que le pneu soit neuf ou partiellement usé.

Ainsi, le pneu pour véhicule poids lourd conforme à l'invention, comprend une armature de carcasse surmontée par une armature de sommet, cette armature de sommet s'étendant de part et d'autre d'un plan équatorial divisant le pneu en deux parties égales ou sensiblement égales, et radialement à l'extérieur de cette armature de sommet une bande de roulement ayant une largeur W et une épaisseur totale E, cette épaisseur totale E correspondant à l'épaisseur totale de matière mesurée sur le plan équatorial entre la surface de roulement et la partie radialement la plus à l'extérieur de l'armature de sommet, cette bande de roulement ayant une épaisseur maximale PMU de matière à user en roulage, cette épaisseur maximale PMU étant au plus égale à l'épaisseur totale E.

L'armature de sommet est formée d'au moins deux nappes de travail et d'une nappe de protection positionnée radialement à l'extérieur des nappes de travail et radialement à l'intérieur de la bande de roulement, la nappe de travail la plus étroite ayant une largeur comprise entre 70% et 90% de la largeur W de la bande.

La bande de roulement est pourvue de rainures que dans la partie radialement à l'extérieur de la nappe de protection, chaque rainure d'orientation circonférentielle ayant une profondeur au moins égale à 75% de l'épaisseur maximale à user PMU, cette bande comprenant un canal d'orientation générale circonférentielle et faisant le tour complet du pneu destiné à former au moins une nouvelle rainure après une usure partielle au moins égale à 50% de l'épaisseur maximale de matière à user PMU, ce canal étant formé de manière à ce que les distances minimales entre ce canal et les nappes de travail et la nappe de protection soient différentes de zéro.

Une nappe de travail comprend des renforts orientés selon un angle compris entre 15 degrés et 25 degrés avec la direction circonférentielle sur le pneu pour participer notamment à l'équilibre des efforts liés à la mise en pression du pneu. Une nappe de protection a pour fonction de protéger les nappes de travail et est en général renforcée par des renforts ayant des courbes force-allongement à deux pentes distinctes, ces renforts étant adaptés pour se déformer de façon sensible sous faible effort (contrairement aux renforts des nappes de travail).

Ce pneu est caractérisé en ce que :
- la nappe de protection a une largeur au plus égale à 70% de la largeur de la nappe de travail la plus étroite axialement ;
- et en ce que le canal est formé axialement d'un côté du plan équatorial entre une extrémité axiale de la nappe de travail la plus étroite et une extrémité axiale de la nappe de protection, ces deux extrémités étant situées du même côté que le canal par rapport au plan équatorial.

Selon une variante de l'invention, la bande de roulement comprend une pluralité de nervures parmi lesquelles il y a deux nervures épaules. Chaque nervure épaule est délimitée par une rainure s'ouvrant sur l'extérieur et les points de la bande axialement les plus éloignés du plan équatorial. Si on note M la largeur sur la surface de roulement à l'état neuf de cette nervure épaule, il est avantageux que cette largeur M soit au moins égale à 1.5 fois la largeur des autres nervures.

Selon une autre variante, la bande de roulement selon l'invention est telle que chaque canal se prolonge dans l'épaisseur de la bande à l'état neuf vers la surface de roulement par une incision d'une géométrie appropriée pour permettre la fermeture au moins en partie de ladite incision lors du passage dans le contact. Cette disposition est particulièrement avantageuse car compte tenu de la largeur des nervures épaules elle permet de redonner de la souplesse en flexion donc en mise à plat lors du passage dans le contact.

Selon une variante de l'invention, la bande de roulement est telle que, à l'état neuf, le volume de creux de chaque canal est au moins égal à 2% et au plus égal à 15% du volume total de creux formé par l'ensemble des canaux, des rainures et des incisions, quelle que soit l'orientation desdits canaux, rainures ou incisions.

Selon une variante, la bande de roulement selon l'invention est telle que le volume total de creux de la bande à l'état neuf est au plus égal à 18% du volume total de matière à user en roulage, c'est-à-dire correspondant à une épaisseur PMU.

Selon une autre variante, la bande de roulement selon l'invention est telle que chaque incision étant délimitée par des faces en vis-à-vis, ces faces comprennent des moyens de blocage mécanique des mouvements relatifs desdites faces l'une par rapport à l'autre.

Selon une autre variante, la bande de roulement selon l'invention est telle que chaque canal s'étend dans l'épaisseur de la bande jusqu'à une profondeur supérieure à l'épaisseur maximale de matière à user PMU et au plus jusqu'à l'épaisseur totale E.

Selon une autre variante, la bande de roulement selon l'invention est telle qu'au moins un canal circonférentiel présente une géométrie "ondulante" au moins dans la direction de l'épaisseur de la bande de roulement, de façon à ne pas déboucher continûment sur la surface de roulement après une usure appropriée.

Selon une autre variante, la bande de roulement selon l'invention est telle que le au moins un canal latéral présentant une géométrie ondulante est en totalité formé sous la surface de roulement de la bande de roulement à l'état neuf.

Selon une autre variante, la bande de roulement selon l'invention est telle qu'au moins un canal latéral circonférentiel présente une géométrie "ondulante" au moins dans une direction parallèle à l'axe de rotation du pneu de manière à rester à même distance dudit axe de rotation. Cette variante est particulièrement intéressante en ce que la position du canal latéral est variable par rapport à l'extrémité de la nappe de protection réduisant ainsi les contraintes.

Dans une autre variante avantageuse, il est prévu au moins un canal additionnel reliant un canal circonférentiel formé entre les extrémités de la nappe de protection et l'extrémité de la nappe de travail la moins large axialement, ce canal additionnel débouchant en outre dans une rainure ou vers l'extérieur de la bande de roulement. Grâce à cette disposition on réalise une sorte de réseau permettant à l'air de circuler de l'intérieur vers l'extérieur et réciproquement, ceci favorisant une meilleure régulation thermique des bords de la bande de roulement.

De manière avantageuse la bande de roulement selon l'invention telle que décrite est prévue pour équiper un pneu dont l'usage préconisé est d'être monté sur un essieu moteur d'un véhicule poids lourd. Avantageusement, ce pneu comprend un moyen indiquant son usage préférentiel.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue en coupe d'un pneu selon une première variante de l'invention ;
La figure 2 montre une vue en coupe d'un pneu selon une autre variante de l'invention ;
La figure 3 montre une vue en plan de la bande de roulement du pneu de la figure 2;
La figure 4 montre une autre variante de pneu selon l'invention pour laquelle le canal ondule dans la profondeur de la bande ;
La figure 5 montre une vue de coté d'une partie de la bande de la figure 4;
La figure 6 montre une variante selon l'invention selon laquelle le canal se prolonge vers la surface de roulement par une incision présentant des ondulations dans l'épaisseur de la bande.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

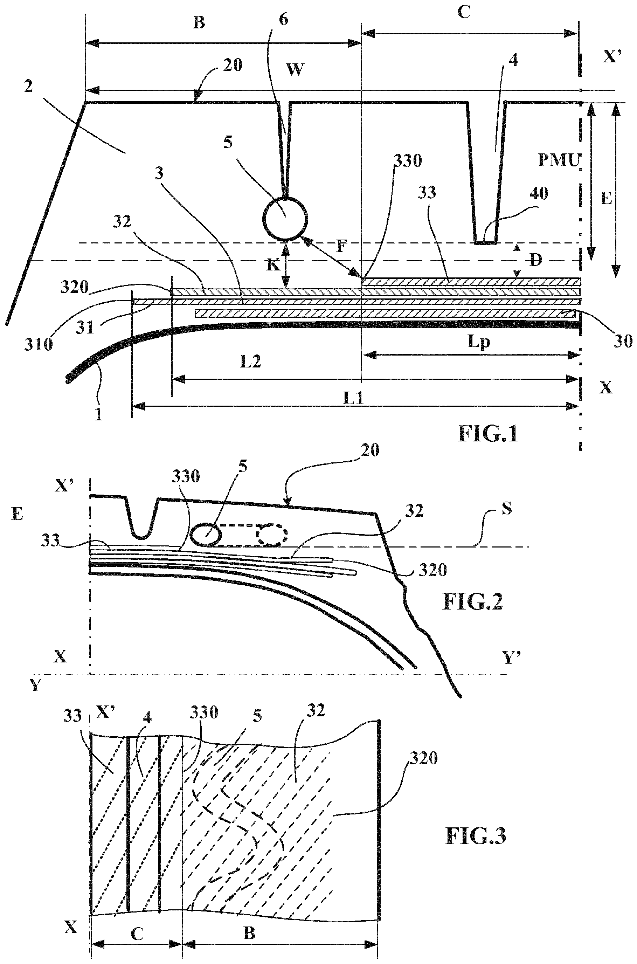

La figure 1 montre une vue partielle d'une moitié d'un pneumatique de dimension 315/70 R 22.5 comprenant deux bourrelets prolongés par des flancs se raccordant à un sommet, ce pneu étant renforcé par une armature de carcasse radiale composée d'une seule nappe 1 de câbles métalliques. Le sommet du pneu comprend une armature de sommet surmontée radialement à l'extérieur par une bande de roulement 2 comprenant une surface de roulement 20. L'armature de carcasse est ancrée dans chaque bourrelet à une tringle pour former un retournement. Cette armature de carcasse est, radialement à l'extérieur, surmontée de l'armature de sommet 3 comprenant radialement de l'intérieur vers l'extérieur :

- une première nappe de sommet 30 dite "nappe de triangulation" formée de câbles métalliques, ces câbles étant orientés d'un angle égal à ou proche de 65 degrés avec la direction circonférentielle (direction perpendiculaire au plan de la figure 1) ;

- surmontant cette nappe de sommet 30, une première nappe de travail 31, formée de câbles métalliques faisant avec la direction circonférentielle un angle égal à 18 degrés, les câbles de la nappe de triangulation 30 et de la première nappe de travail 31 ayant la même orientation par rapport à la direction circonférentielle ; dans le cas présent la demi largeur axiale totale L1 de cette nappe de travail est égale à 252 mm (cette demi largeur est mesurée entre le plan équatorial XX' et l'extrémité 310 de la nappe de travail 31) ;

- puis une deuxième nappe de travail 32 formée de câbles métalliques identiques à ceux de la première nappe de travail 31, et faisant avec la direction circonférentielle un angle opposé à l'angle de la première nappe de travail et, dans le cas montré, égal en valeur absolue à 18 degrés ; la largeur axiale totale L2 de la deuxième nappe de travail est égale à 232 mm ;
- enfin, surmontant cette deuxième nappe de travail 32 de part et d'autre du plan équatorial, une nappe de protection 33 formée de câbles métalliques, orientés par rapport à la direction circonférentielle d'un angle de même sens que l'angle des câbles de la deuxième nappe de travail, et égal en valeur absolue à cet angle, cette nappe de protection ayant pour fonction de protéger les nappes de travail contre les agressions extérieures lors du roulage. Les câbles de cette nappe de protection présentent sous une force de traction égale à 10% de la force de rupture un allongement au moins égal à 0,2%.

La largeur Lp de la nappe de protection est égale à 124 mm.

La largeur totale W de la bande de roulement, correspondant à la largeur de empreinte de contact dans les conditions d'usage est égale à 280 mm. L'ensemble des nappes de l'armature de sommet 3 sont disposées de manière à être équi-réparties de part et d'autre du plan équatorial XX'.

Dans la partie C de la bande de roulement située radialement à l'extérieur de la nappe de protection 33 et de même largeur que celle de la nappe de protection 33, on trouve, de chaque côté du plan équatorial XX', une rainure 4 ayant une profondeur égale à 20 mm à l'état neuf. Cette rainure 4 a une largeur variable avec la profondeur : sur la surface de roulement 20 à l'état neuf cette largeur est égale à 10.5 mm et à 1.6 mm du fond de rainure 40 cette largeur est égale à 4 mm. En outre, cette bande de roulement 2 est prévue pour permettre un "recreusage" ("regrooving" en anglais), c'est-à-dire que chaque rainure 4 peut faire l'objet, avant d'atteindre le niveau d'usure limite, d'une opération de creusage mécanique pour recréer une rainure ayant une profondeur moyenne de 3 mm. Dans le cas présent, la hauteur maximale de matière à user, correspondant à l'épaisseur PMU est, à l'état neuf, égale à 23 mm (20 mm de profondeur de rainure 4 auxquels s'ajoutent les 3 mm prévus pour réaliser le recreusage). Par ailleurs, la nappe de protection 33 est disposée à une distance D égale à 5 mm du fond de la rainure 40, ce qui permet de conserver une épaisseur de matière de 2 mm entre cette nappe de protection 33 et le fond de la rainure 40 après recreusage. L'épaisseur totale E de bande est mesurée entre la surface de roulement 20 et l'extérieur de la nappe de protection 33 sur le plan équatorial à l'état neuf ; elle est ici égale à 25 mm.

Axialement entre l'extrémité 330 de la nappe de protection 33 et l'extrémité 320 de la nappe de travail 32 la plus à l'extérieur, il est formé un canal 5 de section circulaire de diamètre égal à 6 mm. Ce canal 5 orienté circonférentiellement est disposé de manière à être en totalité à l'intérieur de la bande de roulement à l'état neuf et plus précisément à une distance de la surface de roulement 20 égale à 14 mm. Dans le cas présent, le fond 51 de ce canal 5 (correspondant aux points dudit canal les plus à l'intérieur de la bande) se trouve à la même distance de la surface de roulement 20 que le fond de la rainure 40 à l'état neuf.

La distance minimale F entre les points délimitant ce canal 5 et l'extrémité 330 de la nappe de protection 33 située du même côté du plan équatorial XX' est égale à 20 mm tandis que la distance minimale K des points délimitant ce même canal 5 par rapport à la nappe de travail 32 radialement la plus à l'extérieur est égale à 7 mm.

Ce canal 5 orienté circonférentiellement fait le tour complet du pneu et est prolongé radialement vers l'extérieur par une incision 6 dont la largeur d'ouverture sur la surface de roulement 20 à l'état neuf est égale à 3.5 mm. Cette incision 6 débouche sur le canal 5 avec une largeur égale à 2 mm. Les dimensions de l'incision 6 sont appropriées pour assurer la fermeture au moins en partie de ladite incision lors du passage dans le contact avec une chaussée et ainsi pouvoir assurer la fermeture du canal 5 empêchant ainsi l'introduction de corps étrangers pouvant être présents sur la chaussée pendant le roulage du pneu.

Des tests de roulage ont été effectués dans lesquels des pneus selon l'invention ont été comparés à des pneus de même dimension et pour lesquels des rainures additionnelles étaient formées en lieu et place des canaux tout en prolongeant axialement la nappe de protection au-delà desdites rainures. Les autres armatures qu'elles soient de carcasse ou de sommet sont identiques à celle du pneu selon l'invention. Ces tests ont permis de confirmer un gain en résistance au roulement des pneus selon l'invention (c'est-à-dire une moindre consommation d'énergie en roulage) et une amélioration significative de la performance de freinage dès lors que le pneu est en partie usé. En outre, le pneu selon l'invention améliore significativement la pénétration d'objets dans la bande de roulement et en conséquence procure une meilleure endurance de l'armature de sommet.

La variante montrée avec la figure 2 reprend en partie les caractéristiques du pneu montré avec la figure 1. Toutefois, le canal 5 est formé de manière à suivre une trajectoire ondulante sur une surface cylindrique virtuelle S dont l'axe est confondu avec l'axe de rotation du pneu. Ainsi le canal 5 est à une distance constante ou quasiment constante de la surface de roulement 20 du pneu à l'état neuf. Les points les plus à l'intérieur radialement de ce canal sont à une profondeur proche voire égale à l'épaisseur totale E de la bande de roulement. Cette variante est dépourvue d'incision prolongeant le canal vers l'extérieur, c'est-à-dire vers la surface de roulement à l'état neuf. Le moulage de ce canal peut se faire sur la bande sur sa surface radialement interne avec éventuellement la présence d'une incision débouchant vers cette surface radialement interne de la bande avant de rapporter cette bande sur une ébauche de pneu. L'avantage procuré par la disposition de cette variante est de désensibiliser encore davantage les extrémités 330 de la nappe de protection 33 en éloignant au moins en partie le canal desdites extrémités.

La figure 3 montre de façon partielle une vue en plan de la variante montrée en coupe avec la figure 2 selon laquelle on voit la géométrie ondulante suivie par le canal 5 dans les parties latérales B de la bande de roulement.

Cette dernière variante peut être modifiée afin que le canal chevauche au moins en partie l'extrémité de la nappe de travail la plus étroite.

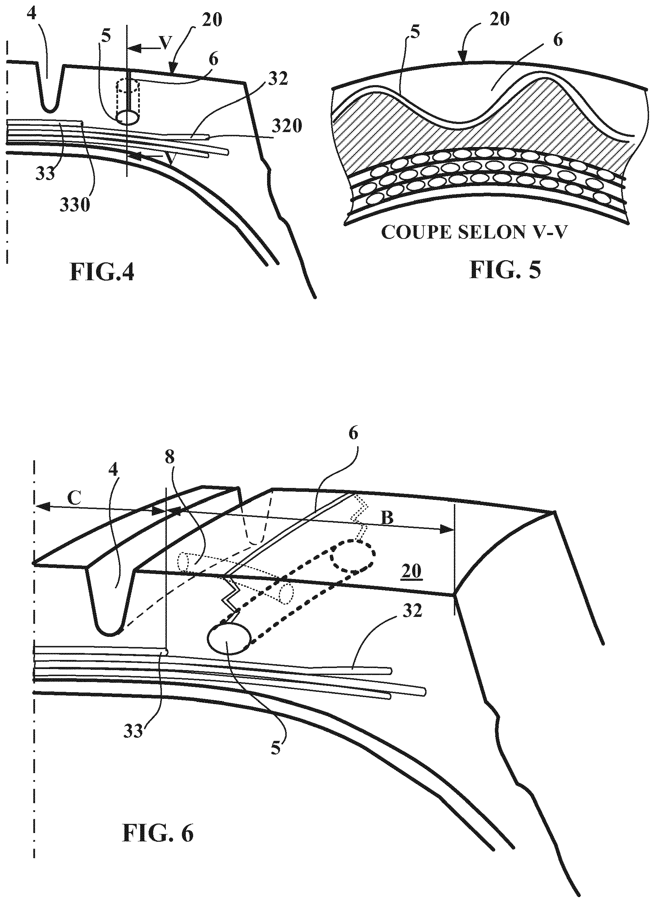

Dans une variante montrée à la figure 4, chaque canal 5 peut onduler pour se rapprocher et s'éloigner de façon alternée de la surface de roulement 20 à l'état neuf. Dans cette variante le canal 5 est prolongé jusqu'à la surface de roulement 20 par une incision 6. Cette disposition peut bien sûr être combinée avec la disposition montrée avec les figures 2 et 3 pour obtenir à la fois des ondulations du canal dans l'épaisseur et dans la largeur de la bande. La figure 5 montre une vue en coupe selon un plan repéré par sa trace sur la figure 4 par les lettres V-V. Sur cette coupe, on peut voir que le canal 5 oscille pour localement se rapprocher de la surface de roulement 20 puis s'en éloigner. Dans cette variante il est judicieux de prévoir la présence de canaux additionnels connectés d'un côté au canal oscillant 5 dans ses parties les plus éloignées de la surface de roulement 20 et d'un autre côté à la rainure 4.

Dans une autre variante montrée avec la figure 6, chaque canal circonférentiel 5 est prolongé radialement vers la surface de roulement 20 de la bande à l'état neuf par une incision 6 de largeur sensiblement constante, cette incision comprenant sur les parois la délimitant des moyens de blocage mécanique des déplacements relatifs desdites parois. Dans cette variante, cette incision 6 suit une géométrie en zigzag dans l'épaisseur de la bande. Cette disposition permet à la fois de limiter la diminution de rigidité liée à la présence d'une incision et en outre de limiter la possibilité de voir un corps étranger pénétrer dans le canal sous-jacent.

Dans toutes les variantes décrites ici, il peut en outre être judicieux d'adapter en conséquence la nature et les propriétés des matériaux constitutifs de la bande de roulement dans les régions indiquées par les lettres B et C notamment sur les figures 1 et 6.

De plus cette variante montre une pluralité de canaux transversaux 8 prenant naissance dans le canal circonférentiel 5 et débouchant à son autre extrémité dans une rainure circonférentielle. Par cette disposition avantageuse on bénéficie à l'intérieur de la bande de roulement et au plus près de la région proche de l'extrémité de l'armature de sommet d'une sorte de ventilation par une circulation de la rainure vers le canal par l'intermédiaire des canaux transversaux reliant rainure au canal circonférentiel. Grâce à cette combinaison des rainures et des canaux circonférentiels et transversaux, il est formé une sorte de réseau en surface et sous-jacent à la surface de roulement à l'état neuf.

Dans une autre variante non représentée ici, on prévoit de relier chaque canal d'orientation générale circonférentielle à une pluralité de canaux d'orientation transversale, ces derniers débouchant sur les parois latérales à l'extérieur de la bande de roulement afin de faciliter l'évacuation latérale de fluide notamment lors de roulage par temps de pluie et en outre de favoriser une meilleure ventilation de la partie de la bande de roulement qui se trouve au voisinage de l'extrémité axiale de l'armature de sommet.

L'invention ayant été décrite de manière générale et au moyen de quelques variantes, il doit être compris que cette invention ne saurait être limitée à ces seules variantes. Il est clair que diverses modifications peuvent y être apportées sans sortir du cadre général de la présente tel que défini par les revendications ci-jointes. Notamment les canaux peuvent être en nombre supérieur à l'unité de chaque côté du plan équatorial en fonction de la dimension du pneu et/ou de l'usage. De même, ces canaux orientés circonférentiellement peuvent être raccordés à d'autres canaux également prévus sous la surface de roulement à l'état neuf et débouchant latéralement, par exemple sur les flancs de la bande de roulement.

## Revendications

1. Pneu pour véhicule poids lourd, ce pneu comprenant une armature de carcasse (1) surmontée par une armature de sommet (3), cette armature de sommet s'étendant de part et d'autre d'un plan équatorial XX' divisant le pneu en deux parties égales ou sensiblement égales, et radialement à l'extérieur de cette armature de sommet (3) une bande de roulement (2) ayant une surface de roulement (20) de largeur W et une épaisseur totale E, cette épaisseur totale E correspondant à l'épaisseur totale de matière mesurée sur le plan équatorial XX' entre la surface de roulement (20) et la partie radialement la plus à l'extérieur de l'armature de sommet (3), cette bande de roulement (2) ayant une épaisseur maximale PMU de matière à user en roulage, cette épaisseur maximale PMU étant au plus égale à l'épaisseur totale E, l'armature de sommet (3) étant formé d'au moins deux nappes de travail (31, 32) et d'une nappe de protection (33) positionnée radialement à l'extérieur des nappes de travail et radialement à l'intérieur de la bande de roulement, la nappe de travail (32) la plus étroite ayant une largeur comprise entre 70% et 90% de la largeur W de la bande, la bande de roulement ne comprenant des rainures que dans la partie radialement à l'extérieur de la nappe de protection (33), chaque rainure d'orientation circonférentielle ayant une profondeur au moins égale à 75% de l'épaisseur maximale à user PMU, cette bande comprenant au moins un canal (5) d'orientation générale circonférentielle et faisant le tour complet du pneu destiné à former au moins une nouvelle rainure après une usure partielle au moins égale à 50% de l'épaisseur maximale de matière à user PMU, ce canal (5) étant formé de manière à ce que les distances minimales entre ce canal et les nappes de travail (31, 32) et la nappe de protection (33) soient différentes de zéro, ce pneu étant **caractérisé en ce que** la nappe de protection (33) a une largeur au plus égale à 70% de la largeur de la nappe de travail (32) la plus étroite, et **en ce que** le canal (5) est formé axialement d'un côté du plan équatorial entre une extrémité axiale de la nappe de travail la plus étroite et une extrémité (330) axiale de la nappe de protection (33), ces deux extrémités étant situées du même côté que le canal par rapport au plan équatorial.

2. Pneu pour véhicule poids lourd selon la revendication 1 **caractérisé en ce que** sa bande de roulement comprend une pluralité de nervures parmi lesquelles il y a deux nervures épaules, chaque nervure épaule de largeur M étant délimitée par une rainure s'ouvrant sur l'extérieur et les points de la bande axialement les plus éloignés du plan équatorial, ce pneu étant **caractérisé en ce que** la largeur M de chaque nervure épaule est au moins égale à 1.5 fois la largeur des autres nervures.

3. Pneu pour véhicule poids lourd selon la revendication 1 ou selon la revendication 2 **caractérisé en ce que** chaque canal (5) se prolonge dans l'épaisseur de la bande à l'état neuf vers la surface de roulement (20) par une incision (6) d'une géométrie appropriée pour permettre la fermeture au moins en partie de ladite incision (6) lors du passage dans le contact.

4. Pneu pour véhicule poids lourd selon l'une des revendications 1 à 3 **caractérisé en ce que**, à l'état neuf, le volume de creux de chaque canal (5) est au moins égal à 2% et au plus égal à 15% du volume total de creux formé par l'ensemble des canaux, des rainures et des incisions, quelle que soit l'orientation desdits canaux, rainures ou incisions.

5. Pneu pour véhicule poids lourd selon l'une des revendications 1 à 4 **caractérisé en ce que** chaque canal (5) s'étend dans l'épaisseur de la bande jusqu'à une profondeur supérieure à l'épaisseur maximale de matière à user PMU et au plus jusqu'à l'épaisseur totale E.

6. Pneu pour véhicule poids lourd selon l'une des revendications 1 à 5 **caractérisé en ce qu'**au moins un canal circonférentiel (5) présente une géométrie ondulante au moins dans la direction de l'épaisseur de la bande de roulement, de façon à ne pas déboucher continûment sur la surface de roulement (20) après une usure appropriée.

7. Pneu pour véhicule poids lourd selon la revendication 6 **caractérisé en ce que** le au moins un canal circonférentiel (5) présentant une géométrie ondulante est en totalité formé sous la surface de roulement de la bande de roulement à l'état neuf.

8. Pneu pour véhicule poids lourd selon l'une des revendications 1 à 5 **caractérisé en ce que** au moins un canal circonférentiel (5) présente une géométrie ondulante au moins dans une direction parallèle à l'axe de rotation du pneu de manière à rester à même distance dudit axe de rotation.

9. Pneu selon l'une des revendications 1 à 8 **caractérisé en ce qu'**il est prévu au moins une canal additionnel (8) reliant un canal circonférentiel (5) formé entre les extrémités de la nappe de protection (33) et l'extrémité de la nappe de travail (32) la moins large axialement, ce canal additionnel (8) débouchant en outre dans une rainure ou vers l'extérieur de la bande de roulement.

10. Pneu selon l'une des revendications 1 à 9 **caractérisé en ce qu'**il comprend un moyen indiquant qu'il est adapté pour être monté sur un essieu moteur d'un véhicule poids lourd.

## Patentansprüche

1. Reifen für ein Schwerlastfahrzeug, wobei dieser Reifen eine Karkassenbewehrung (1) umfasst, die von einer Scheitelbewehrung (3) überlagert wird, wobei sich diese Scheitelbewehrung beiderseits einer Äquatorialebene XX' erstreckt, welche den Reifen in zwei gleiche oder im Wesentlichen gleiche Teile aufteilt, und radial außerhalb dieser Scheitelbewehrung (3) einen Laufstreifen (2), der eine Lauffläche (20) mit einer Breite W und eine Gesamtdicke E aufweist, wobei diese Gesamtdicke E der in der Äquatorialebene XX' gemessenen Gesamtdicke des Materials zwischen der Lauffläche (20) und dem radial äußersten Teil der Scheitelbewehrung (3) entspricht, wobei dieser Laufstreifen (2) eine maximale Dicke PMU von beim Fahren abzunutzendem Material aufweist, wobei diese maximale Dicke PMU höchstens gleich der Gesamtdicke E ist, wobei die Scheitelbewehrung (3) von wenigstens zwei Arbeitslagen (31, 32) und einer Schutzlage (33), die radial außerhalb der Arbeitslagen und radial innerhalb des Laufstreifens positioniert ist, gebildet wird, wobei die schmalste Arbeitslage (32) eine Breite zwischen 70 % und 90 % der Breite W des Streifens aufweist, wobei der Laufstreifen nur in dem radial außerhalb der Schutzlage (33) befindlichen Teil Rillen umfasst, wobei jede in Umfangsrichtung verlaufende Rille eine Tiefe aufweist, die wenigstens gleich 75 % der maximalen abzunutzenden Dicke PMU ist, wobei dieser Streifen wenigstens einen im Wesentlichen in Umfangsrichtung und vollständig um den Reifen herum verlaufenden Kanal (5) aufweist, der dazu bestimmt ist, nach einer teilweisen Abnutzung der maximalen Dicke von abzunutzendem Material PMU von wenigstens 50 % wenigstens eine neue Rille zu bilden, wobei dieser Kanal (5) derart ausgebildet ist, dass die minimalen Abstände zwischen diesem Kanal und den Arbeitslagen (31, 32) und der Schutzlage (33) von null verschieden sind, wobei dieser Reifen **dadurch gekennzeichnet ist, dass** die Schutzlage (33) eine Breite aufweist, die höchstens gleich 70 % der Breite der schmalsten Arbeitslage (32) ist, und dadurch, dass der Kanal (5) axial auf einer Seite der Äquatorialebene zwischen einem axialen Ende der schmalsten Arbeitslage und einem axialen Ende (330) der Schutzlage (33) ausgebildet ist, wobei sich diese zwei Enden bezüglich der Äquatorialebene auf derselben Seite wie der Kanal befinden.

2. Reifen für ein Schwerlastfahrzeug nach Anspruch 1, **dadurch gekennzeichnet, dass** sein Laufstreifen mehrere Rippen umfasst, unter denen zwei Schulterrippen vorhanden sind, wobei jede Schulterrippe der Breite M von einer Rille, die sich nach außen öffnet, und den axial am weitesten von der Äquatorialebene entfernten Punkten des Streifens begrenzt wird, wobei dieser Reifen **dadurch gekennzeichnet ist, dass** die Breite M jeder Schulterrippe wenigstens gleich dem 1,5-fachen der Breite der anderen Rippen ist.

3. Reifen für ein Schwerlastfahrzeug nach Anspruch 1 oder nach Anspruch 2, **dadurch gekennzeichnet, dass** sich jeder Kanal (5) in der Dicke des Streifens im neuen Zustand zu der Lauffläche (20) hin durch einen Einschnitt (6) mit einer geeigneten Geometrie, um das wenigstens teilweise Schließen dieses Einschnitts (6) beim Durchgang durch den Kontakt mit der Fahrbahn zu ermöglichen, fortsetzt.

4. Reifen für ein Schwerlastfahrzeug nach einem der Ansprüche 1 bis 3, **dadurch gekennzeichnet, dass** im neuen Zustand das Hohlraumvolumen jedes Kanals (5) wenigstens gleich 2 % und höchstens gleich 15 % des Gesamt-Hohlraumvolumens ist, das von der Gesamtheit der Kanäle, der Rillen und der Einschnitte gebildet wird, gleichgültig, in welcher Richtung diese Kanäle, Rillen oder Einschnitte verlaufen.

5. Reifen für ein Schwerlastfahrzeug nach einem der Ansprüche 1 bis 4, **dadurch gekennzeichnet, dass** sich jeder Kanal (5) in der Dicke des Streifens bis zu einer Tiefe erstreckt, die größer als die maximalen Dicke von abzunutzendem Material PMU ist, und höchstens bis zu der Gesamtdicke E.

6. Reifen für ein Schwerlastfahrzeug nach einem der Ansprüche 1 bis 5, **dadurch gekennzeichnet, dass** wenigstens ein Umfangskanal (5) eine wellenförmige Geometrie wenigstens in der Richtung der Dicke des Laufstreifens aufweist, so dass er nach einer dementsprechenden Abnutzung nicht durchgehend an der Lauffläche (20) mündet.

7. Reifen für ein Schwerlastfahrzeug nach Anspruch 6, **dadurch gekennzeichnet, dass** der wenigstens eine Umfangskanal (5), der eine wellenförmige Geometrie aufweist, im neuen Zustand vollständig unter der Lauffläche des Laufstreifens ausgebildet ist.

8. Reifen für ein Schwerlastfahrzeug nach einem der Ansprüche 1 bis 5, **dadurch gekennzeichnet, dass** wenigstens ein Umfangskanal (5) eine wellenförmige Geometrie wenigstens in einer zu der Drehachse des Reifens parallelen Richtung aufweist, so dass er in demselben Abstand von der Drehachse verbleibt.

9. Reifen nach einem der Ansprüche 1 bis 8, **dadurch gekennzeichnet, dass** wenigstens ein zusätzlicher Kanal (8) vorgesehen ist, der einen Umfangskanal (5) verbindet, der zwischen den Enden der Schutzlage (33) und dem Ende der axial am wenigsten breiten Arbeitslage (32) ausgebildet ist, wobei dieser zusätzliche Kanal (8) außerdem in eine Rille oder zur Außenseite des Laufstreifens hin mündet.

10. Reifen nach einem der Ansprüche 1 bis 9, **dadurch gekennzeichnet, dass** er ein Mittel umfasst, welches anzeigt, dass er geeignet ist, auf einer Antriebsachse eines Schwerlastfahrzeugs montiert zu werden.

## Claims

1. Tire for a heavy goods vehicle, this tire comprising a carcass reinforcement (1) surmounted by a crown reinforcement (3), this crown reinforcement extending on either side of an equatorial plane XX' dividing the tire into two equal or substantially equal parts, and, radially outside this crown reinforcement (3), a tread (2) having a rolling surface (20) with a width W and a total thickness E, this total thickness E corresponding to the total thickness of material measured on the equatorial plane XX' between the rolling surface (20) and the radially outermost part of the crown reinforcement (3), this tread (2) having a maximum thickness PMU of material intended to become worn during running, this maximum thickness PMU being at the most equal to the total thickness E, the crown reinforcement (3) being formed by at least two working plies (31, 32) and a protection ply (33) positioned radially outside the working plies and radially inside the tread, the narrowest working ply (32) having a width in the range from 70% to 90% of the width W of the tread, the tread comprising grooves only in the part radially outside the protection ply (33), each circumferentially orientated groove have a depth of at least 75% of the maximum thickness intended to become worn PMU,this tread comprising at least one generally circumferentially orientated channel (5), running around the whole of the tire and intended to form at least one new groove after partial wear equal to at least 50% of the maximum thickness of material intended to become worn PMU, this channel (5) being formed in such a way that the minimum distances between this channel and the working plies (31, 32) and the protection ply (33) are different from zero,this tire being **characterized in that** the protection ply (33) has a width at most equal to 70% of the width of the narrowest working ply (32), and **in that** the channel (5) is formed axially on one side of the equatorial plane between an axial end of the narrowest working ply and an axial end (330) of the protection ply (33), these two ends being located on the same side as the channel with respect to the equatorial plane.

2. Tire for a heavy goods vehicle according to Claim 1, **characterized in that** its tread comprises a plurality of ribs including two shoulder ribs, each shoulder rib with a width M being delimited by a groove opening on the outside and the points of the tread axially farthest from the equatorial plane, this tire being **characterized in that** the width M of each shoulder rib is at least equal to 1.5 times the width of the other ribs.

3. Tire for a heavy goods vehicle according to Claim 1 or 2, **characterized in that** each channel (5) is extended in the thickness of the tread in the new state towards the rolling surface (20) by a slit (6) having an appropriate geometry to allow said slit (6) to close, at least partially, during passage through the footprint.

4. Tire for a heavy goods vehicle according to any of Claims 1 to 3, **characterized in that**, in the new state, the volume of voids in each channel (5) is not less than 2% and not more than 15% of the total volume of voids formed by the set of channels, grooves and slits, regardless of the orientation of said channels, grooves or slits.

5. Tire for a heavy goods vehicle according to any of Claims 1 to 4, **characterized in that** each channel (5) extends in the thickness of the tread to a depth greater than the maximum thickness of material intended to become worn PMU and, at most, over the total thickness E.

6. Tire for a heavy goods vehicle according to any of Claims 1 to 5, **characterized in that** at least one circumferential channel (5) has an undulating geometry at least in the direction of the thickness of the tread, so that it does not open continuously on the rolling surface (20) after an appropriate degree of wear.

7. Tire for a heavy goods vehicle according to Claim 6, **characterized in that** the at least one circumferential channel (5) having an undulating geometry is entirely formed under the rolling surface of the tread in the new state.

8. Tire for a heavy goods vehicle according to any of Claims 1 to 5, **characterized in that** at least one circumferential channel (5) has an undulating geometry at least in a direction parallel to the axis of rotation of the tire, so that it remains at the same distance from said axis of rotation.

9. Tire according to any of Claims 1 to 8, **characterized in that** at least one additional channel (8) is provided, linking a circumferential channel (5) formed between the ends of the protection ply (33) and the end of the axially narrowest working ply (32), this additional channel (8) also opening into a groove or towards the outside of the tread.

10. Tire according to any of Claims 1 to 9, **characterized in that** it comprises a means indicating that it is suitable for mounting on a driving axle of a heavy goods vehicle.
